# EUROPÄISCHE PATENTSCHRIFT

(11) **EP 1 371 341 B1**
(45) Veröffentlichungstag und Bekanntmachung des Hinweises auf die Patenterteilung: **12.01.2011**
(21) Anmeldenummer: 02090379.5
(22) Anmeldetag: 15.11.2002
(51) Int. Cl.: A61C 8/00, A61B 17/68

(54) **Dentalimplantat mit knochenadaptativer Oberflächenstruktur**
Dental implant with a structured surface adapted for bone
Implant dentaire avec surface structurée pour s'adapter à l'os

(30) Priorität: 10.06.2002 DE 20208975 U
(43) Veröffentlichungstag der Anmeldung: 17.12.2003
(73) Patentinhaber: Dr. Ihde Dental AG, 8738 Uetliburg (CH)
(72) Erfinder: Ihde, Stefan, Dr., 8738 Uetliburg (CH)
(74) Vertreter: Neumann, Günter

(56) Entgegenhaltungen:
- AT-B- 392 582
- CH-A- 690 416
- DE-U- 20 202 424
- FR-A- 2 302 715
- US-A- 3 925 892
- US-A- 4 344 757
- US-A- 4 522 596

## Beschreibung

Die Erfindung betrifft knochenadaptative Oberflächenstrukturen für laterale Kieferimplantate, d. h. für Implantate, die von der Seite her in den Kiefer eingeschoben werden und die auch unter der Bezeichnung Diskimplantate bekannt sind.

In der zahnärztlichen Implantologie werden seit Jahrzehnten unterschiedliche, industriell hergestellte Implantate verwendet - namentlich Zylinderimplantate, Schraubenimplantate, Blattimplantate und Diskimplantate. Daneben spielen die individuell hergestellten subperiostalen Implantate eine Rolle.

Diese Implantate entwickelten sich aus einer Art Kastenform und besitzen in der Regel einen scheibenartigen Grundkörper bzw. Implantatfuß. US 3 925 892 (Juillet) beschreibt ein Implantat mit einem rechteckigen Grundkörper und einem darauf aufgeschraubten Pfosten, auf dem dann die Krone oder das Protetikteil befestigt wird. Ein einstückiges Implantat beschreibt FR 2 302 715 (Clune-Cost). Gemäss US 4 722 687 (Scortecci) wurde später ein kongruentes Osteotomieinstrument und daneben ein Osteotomiewerkzeug entwickelt, welches gleichzeitig als sein eigenes Implantat diente, also im Knochen belassen wurde US 4 815 974). US 4 344 757 (Streel) beschrieb später weitere mögliche Formen, ebenso US 4 964 801 (Kawahara), EP 0 935 494 A1 (lhde) etc.

Allen vorgenannten Entwicklungen war gemeinsam, dass sie im wesentlichen die Geometrie bzw. die äußerliche Form des Implantats verbesserten, was zu verbreiterten Einsatzmöglichkeiten, geringerer Bruchanfälligkeit und besserem Halt beitrug.

Ein möglichst starker Halt im Kieferknochen ist unabdingbare Zielstellung jeder Implantation. Neben den unterschiedlich gestalteten Grundkörpern, mit denen das Einwachsen des Implantates in den Kieferknochen unterstützt und der feste Sitz verbessert werden sollen, wurden in jüngster Zeit Oberflächenstrukturen diskutiert, die den Halt der Implantate verbessern sollen - CH 690 416 A5, DE 202 02 424 U. Hierbei handelt sich es sich um Kombinationen von (Sand-) Strahlvorgängen mit Ätzvorgängen, wobei das Anätzen auch den Sinn hat, die Reste der maschinellen Bearbeitung und des Strahlens von den Implantatoberflächen zu entfernen. Diese Verfahren bearbeiten die Oberfläche auf mikroskopischer Ebene.

Aus US 4 344 757 ist ferner ein basal osseo integrierendes Implantat mit variabler Geometrie seines Grundkörpers bekannt, die eine relativ leichtere Anpassung des Implantates an die jeweiligen anatomischen Bedingungen des Kieferknochens gestattet. An den Stirnseiten des Grundkörpers nach US 4 344 757 sind Verlängerungen und Zungen vorgesehen, die über Sollbruchstellen, die durch rillenförmige Vertiefungen gebildet werden, miteinander verbunden sind. Der Erfindung liegt die Aufgabe zugrunde, den Verlauf des Einheilungsprozess nach Insertion des Implantates in den Kieferknochen zu beschleunigen und den verdrehsicheren festen Halt des inserierten Implantates im Kieferknochen weiter zu verbessern.

Erfindungsgemäß wird die Aufgabe durch laterale Kieferimplantate entsprechend den Merkmalen nach Anspruch 1 gelöst. Vorteilhafte Weiterbildungen der Erfindung ergeben sich aus den Unteransprüchen 2 bis 17.

Es hat sich gezeigt, dass signifikante Verbesserungen des Implantathalts bei lateralen Implantaten, unabhängig von der Geometrie des Implantatkörpers auch mit Hilfe von makromechanisch wirkenden Oberflächenstrukturen und sogar einer makromechanischen Ausprägung der Oberfläche erzielt werden können. Auf den ersten Blick erscheint es unmöglich, makromechanische Oberflächenstrukturen bei lateralen Implantaten anzubringen. Das von Seite her im Kieferknochen angelegte Implantatbett muss bestimmungsgemäß sehr dünn sein, um die Blutversorgung nicht zu stark zu beeinträchtigen und eine primäre Knochenheilung zu ermöglichen. Überraschender Weise hat es sich weiter gezeigt, dass die mit einer Oberflächenstruktur in Form von Rillen, die ein wellenförmiges, spitz auslaufendes oder ein sägezahnartiges Profil haben können und parallel zueinander, konzentrisch zum Gewindeträger oder spiralförmig auf der Oberfläche und/oder der Unterseite des Grundkörpers angeordnet sind und sich zumindest teilweise auch auf den Steg des Implantates erstrecken können, auch dann relativ leicht eingesetzt werden können, wenn der gefräste Osteotomieschlitz die Kernhöhe h2 der Oberflächenstruktur nicht überschreitet. Nach dem Einsetzen des Implantates prägen sich die Oberflächenstrukturen in den Kieferknochen ein, was durch die Kaukraft noch gefördert wird, weil die Oberflächenstrukturen senkrecht zur Kaukraft liegen - anders als bei crestalen (Schraub)lmplantaten, wo die Gewinde etc. quer zur Kaurichtung liegen.

An Hand histologischer Schnitte konnte festgestellt werden, dass sich während des Einsetzens kleine Knochenpartikel vom Kieferknochen abschaben, die von den Vertiefungen der Oberflächenstrukturen aufgenommen werden. Auf diese Weise wird das Entstehen von Hohlräumen vermieden und durch die abgeschabten Knochenpartikel der Heilungsprozess wesentlich beschleunigt. Diese vorteilhaften Wirkungen treten ebenfalls ein, wenn die Oberflächenstruktur durch napfartige Einsenkungen gebildet wird.

Nach einem weiteren Merkmal der Erfindung können die Oberflächenstrukturen durch unterschiedlich ausgeformte Aussparungen und Ausfräsungen gebildet werden, die in den Randzonen des Grundkörpers eingearbeitet sind. Vorteilhafter Weise sollten bei dieser Ausführungsvariante die Geometrie der voneinander abweichenden Aussparungen so gewählt werden, dass sich aus den einander anliegenden Formen der Aussparungen eine sich hinterschneidende Konfiguration ergibt. Darüber hinaus kann der Bodengrund wiederum so gestaltet sein, dass er im peripheren Bereich des Grundkörpers mit einer Kernhöhe h2 ausläuft.

Neben den vorgenannten Vorteilen, die auch mit dieser Lösung erreichbar sind, werden durch die peripheren Aussparungen im Grundkörper das Einwachsverhalten erheblich verbessert, da der Kieferknochen dazu tendiert, sich zu schließen und die in ihrer Konfiguration kleinere Aussparung schneller erreicht und ausfüllt als die etwas größer ausgewählte. Eine hohe Initialfestigkeit kann dadurch wesentlich schneller erreicht werden.

Haben laterale Implantate der erfindungsgemäßen Art auch elastische Eigenschaften, so sinken die Gewindeträger bei Belastung in den spongiösen Knochen ein, was zu einem nach zentral auf den Gewindeträger gerichteten Zug führt. Hierbei können die Oberflächen der bisher bekannten lateralen Implantate aus dem Knochenverbund ausreißen. Durch die erfindungsgemäßen Oberflächenstrukturen gelingt es aber, den Verbund zum Knochen auch bei größeren Belastungen zu halten. Dadurch lassen sich einzelne Implantate stärker belasten, was letztlich dazu führt, dass zur Wiederherstellung der Kaufähigkeit weniger Implantate pro Kiefer nötig sind. So lassen sich gerade auch stärker atrophierte Kiefer noch ohne Knochenaufbau versorgen.

Bei einer richtigen Auswahl von Mikro- und Makrodimensionen gelingt es, ein Implantat zu schaffen, welches sich biomechanisch in den Knochen einfügt, gerade noch gut inserierbar ist und eine Oberflächenstruktur besitzt, die dem Implantat einen optimalen makromechanischen Halt im Kieferknochenknochen bietet. Dabei werden die von vertikal einwirkenden Kaukräfte in erstaunlicher Weise auch von ebenfalls vertikalen verlaufenden Strukturen, wie beispielsweise in die Oberfläche des Implantatfußes und/oder Steges eingebrachte Rillen, abgefangen.

In umfangreichen histologischen Untersuchungsreihen und Abrissversuchen hat sich gezeigt, dass mit den nachfolgenden Abmessungen für die Grundkörper und Oberflächenstrukturen die besten Haftungsresultate zu erreichen sind:
- Implantatdurchmesser D / Implantatbreite: 8 - 15 mm
- Höhe h3 des Implantatfußes am Anschluss des Gewindeträgers: 0,7 - 1,2 mm
- Abstand E der Spitzen der Oberflächenstruktur: 0,2 - 0,7 mm
- Ringbreite G des Implantatfußes: 1,0 - 2,4 mm
- Kernhöhe h2: 0,6 - 0,9 mm
- Tiefe F der Oberflächenstruktur: 0,05 - 0,25 mm

Zur Herstellung der erfindungsgemäßen Implantate eignen sich insbesondere Dreh- oder Fräsverfahren oder eine Kombination beider Verfahren. Für die Endbearbeitung werden vorteilhafter Weise an sich bekannte Sandstrahl- und/oder Ätzverfahren eingesetzt.

Besonders elegant lassen sich die erfindungsgemäßen Oberstrukturen auch mit Hilfe ablativer Laserverfahren herstellen. Diese Art der Herstellung begünstigt auch die Herstellung von napfartigen Oberflächenstrukturen.

Die Erfindung soll nachstehend an Beispielen näher erläutert werden. In den dazugehörigen Zeichnungen zeigen:
- Fig. 1a: den Schnitt L - L aus Fig. 1b
- Fig. 1b: die Draufsicht auf ein knochenadaptatives, mit Oberflächenstrukturen versehenes laterales Kieferimplantat nach der Erfindung mit einem rechteckförmigen Grundkörper;
- Fig. 1c: die Draufsicht auf ein Kieferimplantat nach der Erfindung mit einer spiralförmigen Ausbildung und Anordnung der Oberflächenstrukturen. Diese Ausführung weist ausserordentlich günstige (hohe) Haltbarkeit im Knochen auf.
- Fig. 2: ein laterales Kieferimplantat nach der Erfindung mit einem runden Grundkörper;
- Fig. 3: den Schnitt M - M durch den Steg des Implantates nach Fig. 2 mit einer weiteren vorteilhaften Anordnung einer Oberflächenstruktur nach der Erfindung;
- Fig.4: die Schnittdarstellung eines Ringabschnittes des Grundkörpers mit einer spitz auslaufenden Oberflächenstruktur;
- Fig. 5: einen Ringabschnitt eines Grundkörpers mit einer wellenförmigen Oberflächenstruktur, wobei in der Innenwandfläche des Grundkörpers ebenfalls eine spitz auslaufende Oberflächenstruktur vorgesehen ist;
- Fig. 6: den Ausschnitt eines Grundkörpers mit einer napfartigen Oberflächenstruktur;
- Fig. 7: den Ringabschnitt eines Grundkörpers mit einer sägezahnförmigen Oberflächenstruktur;
- Fig. 8: die vordere Ansicht des in Fig. 9 dargestellten Implantates;
- Fig. 9: ein laterales Implantat, in dessen Grundkörper in Übereinstimmung mit der vorliegenden Erfindung Aussparungen eingearbeitet worden sind;
- Fig. 10: die linke Seitenansicht des Implantates nach Fig. 9.

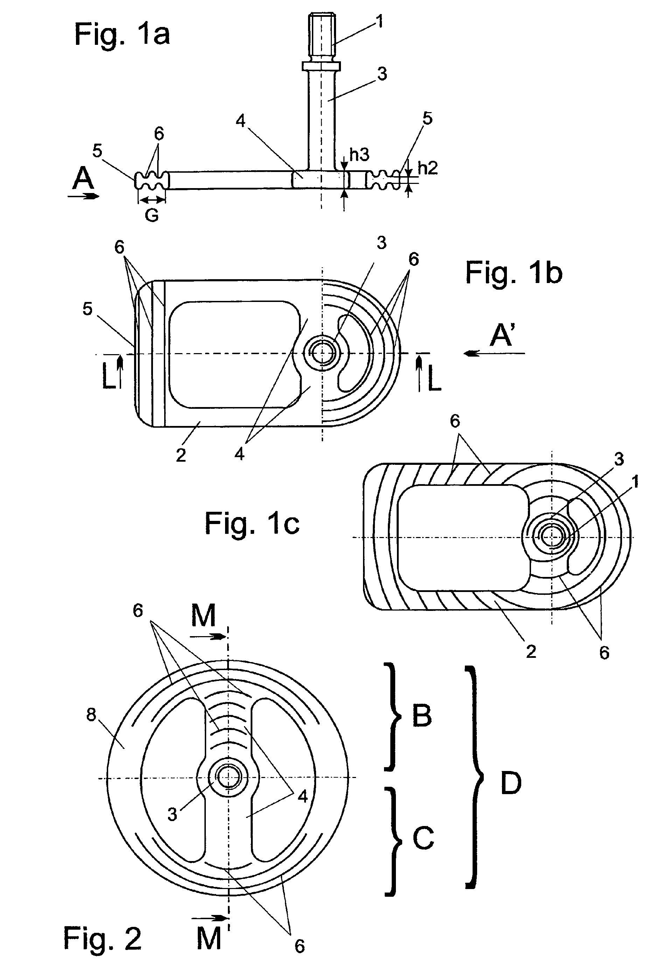

Wie aus Fig. 1a ersichtlich, ist mit 1 das zur Prothetik verbindende Gewinde, welches als Innen- oder Außengewinde ausgeprägt sein kann, gekennzeichnet. 2 bezeichnet den Ringkörper des Implantats, 3 den Gewindeträger, der den Ringkörper mit dem Gewinde verbindet. Mit 4 ist der Steg bezeichnet, der den Gewindeträger 3 mit dem Grundkörper 2 verbindet. Implantate dieser Art übertragen die Kaukräfte bestimmungsgemäß im wesentlichen in den peripheren, hier mit 5 bezeichneten Ringabschnitt des Grundkörpers 2, der im kortikalen Kieferknochen verankert wird. Mit 6a, 6b, 6c ist die erfindungsgemäße Oberflächenstruktur bezeichnet, die sich über das Niveau des Grundkörpers 2 erhebt. Mit G ist die Breite des Grundkörpers 2 resp. der Durchmesser des Grundkörpers 8 angegeben.

Gemäß Fig. 1b werden die erfindungsgemäßen Oberflächenstrukturen durch Rillen 6 gebildet, die zueinander parallel verlaufen können, wie links vom Gewindeträger 3 dargestellt, oder konzentrisch verlaufen - wie rechts vom Gewindeträger 3 dargestellt.

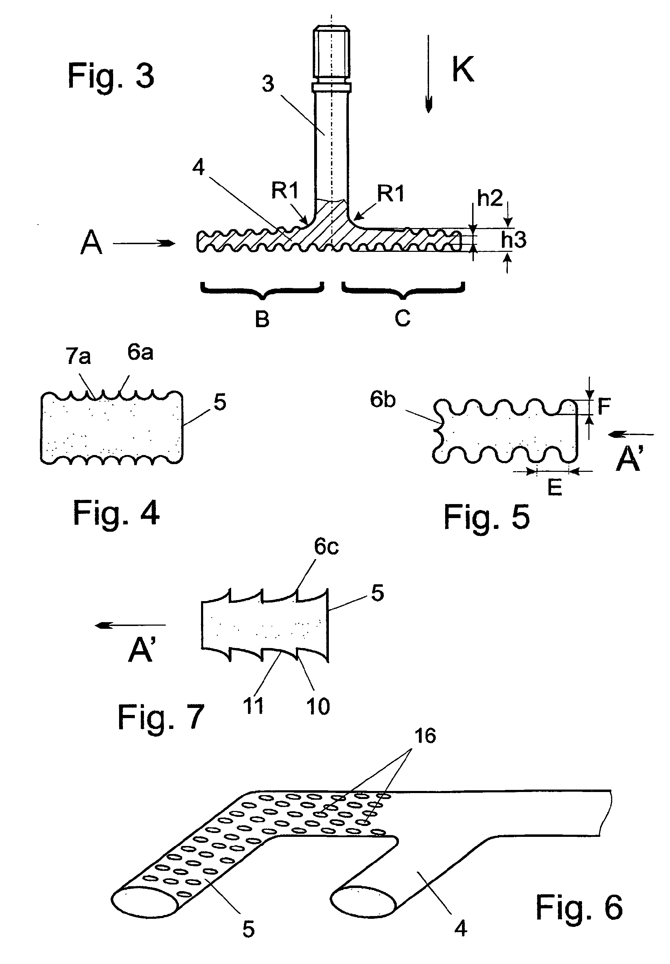

Bei der in Fig. 1c dargestellten Ausführungsform verlaufen die Oberflächenstrukturen 6, die ein Profil entsprechend den Fig. 4, 5 und 7 haben können, spiralförmig und erstrecken sich im wesentlichen über die gesamte Oberfläche und /oder Unterseite des Grundkörpers 2 , wobei das Zentrum der Spirale in den Anschlussbereich des Gewindeträgers 3 im Fuß gelegt worden ist.

Fig. 2 zeigt eine weitere Variante der lmplantat-Grundform- hier ein rundes Implantat. Die wellenförmigen oder spitz auslaufenden Oberflächenstrukturen 6a, 6c. die durch die Rillen 6 gebildet werden, sind im oberen Teil B der Fig. 2 bis zum Gewindeträger 3 angeordnet, während sie im unteren Teil C der Fig. 2 nur bis zum Anschluss des Steges 4 an den Grundkörper 8 reichen. Die Letztere der beiden Ausführungsformen hat den Vorteil, dass durch diese Anordnung die Bruchfestigkeit des Grundkörpers 2 im Bereich des Steges 4 gefördert wird. D bezeichnet den Implantatdurchmesser, wobei es bei runden Implantaten einen Durchmesser gibt, während bei länglichen Implantaten oder bei Implantaten mit mehreren kraftübertragenden Grundkörpern mehrere Durchmesser vorliegen können.

In der Darstellung nach Fig. 3 sind im linken Teil B der Figur die Oberflächenstrukturen bis an den Gewindeträger 3 herangeführt, während sie im rechten Teil C nach links auslaufen. Die zentrale Höhe h3 des Grundkörpers 8 läuft also in eine Kernhöhe h2 des Ringes des Grundkörpers 8 aus, wobei die erfindungsgemäßen Oberflächenstrukturen entweder die zentrale Höhe h3 beibehalten oder, wie im rechten Teil C dargestellt, nach außen hin auslaufen und im peripheren Bereich des Grundkörpers 2 weniger hoch sind, so dass eine Kernhöhe h2 entsteht. Es ist aber durchaus möglich, dass die Oberflächenstruktur im peripheren Bereich eine Höhe besitzt, die die zentrale Höhe H3 des Grundkörpers 8, 2 übersteigt und die Oberflächenstruktur mit kontinuierlicher Abnahme der Tiefe F der jeweils gewählten Profilform im Bereich der Anschlussverbindung von Gewindeträger 3 und Fuß auf die Implantathöhe h3 ausläuft. R1 kennzeichnet den Übergangsradius vom Gewindeträger 3 zum Steg 4. K gibt die Richtung der Hauptkaukraft an. Bei Laterotrusionsbewegungen treten während des Kauakts jedoch auch Kräfte auf, die im Winkel oder gar rechtwinklig zur Hauptkaukraft wirken.

Fig. 4 zeigt eine knochenadaptative Oberflächenstruktur 6a mit einem spitz auslaufenden Wellenprofil, wobei der Bodengrund resp. die Wellentäler 7a im wesentlichen eine runde konkave Form besitzen.

Fig. 5 zeigt eine weitere optimierte Variante in der Ausprägung der Oberflächenstruktur 6b, die auch in den senkrecht verlaufenden Seitenwandflächen des kraftübertragenden Grundkörpers 2, 8 eingebracht sind. Besonders die Ausprägung solcher Strukturen an der Außenseite des Implantats bewähren sich klinisch. Mit A' ist die Richtung angegeben, die der Einschubrichtung entgegensteht. E bezeichnet den Abstand zwischen Wellen oder Spitzen der Oberflächenstruktur. Er beträgt nach den Ergebnissen der dieser Anmeldung zugrunde liegenden Untersuchungen im Optimalfall 0,2 - 0,7 mm.

Fig. 6 zeigt einen Ausschnitt des Grundkörpers, in dem die erfindungsgemäße Oberflächenstruktur durch einzelne Erhebungen mit dazwischenliegenden, napfartigen Einsenkungen gebildet wird, die durch Fräsen oder mittels Laser hergestellt werden. Die Tiefe dieser Einsenkungen beträgt vorzugsweise 0,05 - 0,25 mm, wie an Hand von Untersuchungen überraschenderweise festgestellt werden konnte. Größere Tiefen behindern eher die Osseointegration, kleinere Tiefen erbringen keine guten Resultate bei der Knochenhaftung des Implantats.

Besonders gute Haftungswerte erbringen auch Oberflächenstrukturen mit einer rechtwinkelig oder annähernd rechtwinkelig zur Einschubsrichtung angebrachten Flanken 10 und einer leicht abfallenden, konkaven Flanke 11. Diese sägezahnähnlichen Strukturen können sowohl nur über den Ringbereich des Grundkörpers als auch über das ganze Implantat ausgebildet sein. Aus herstellungstechnischen Gründen kann es jedoch schwierig werden, wirklich rechtwinkelige Flanken zu schaffen, dies vor allem deswegen, weil durch das ablative Strahlen nach dem Dreh- oder Fräsvorgang eine Abflachung der zuvor an sich senkrechten Flanke erfolgen kann. Im Produktionsresultat zeigen sich dann Winkel zwischen 80 und 90 Grad, die allesamt gute klinische Resultate bringen.

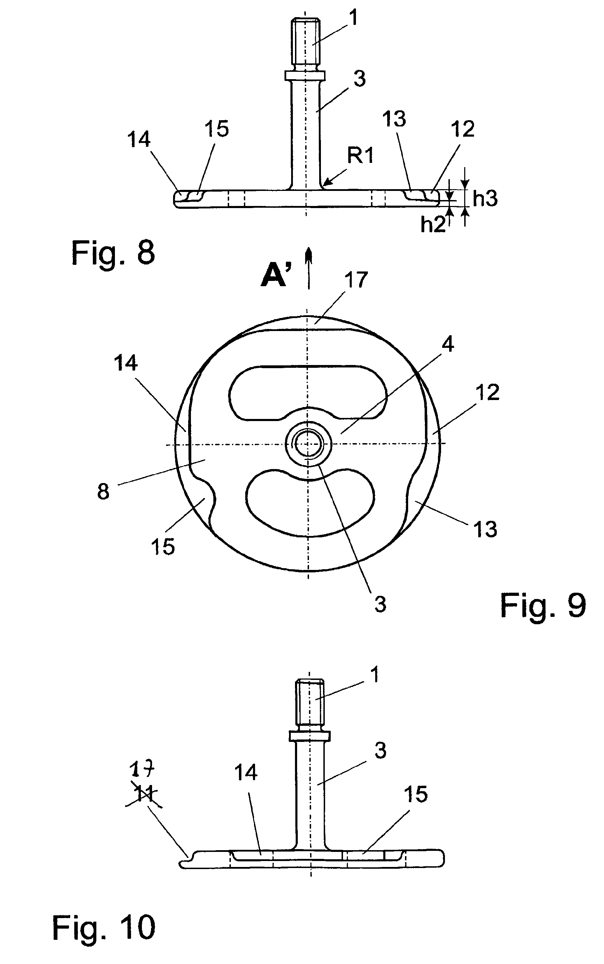

Bei der Ausführung nach Fig. 8 bis 10 sind in den Grundkörper 8 des lateralen Implantates Aussparungen 12; 13 und 14; 15 eingebracht, die eine unterschiedliche Konfiguration besitzen, wobei die voneinander abweichenden Geometrien so gewählt sind, dass zwischen den Formen der benachbarten Aussparungen 12; 13 und 14; 15 eine Hinterschneidung entsteht. Nach dem Einsetzen des Implantates in den gefrästen Osteotomieschlitz wird der Kieferknochen, der die Tendenz hat, sich zusammenzuziehen, die geringer ausgeformten Aussparungen 12 und 14 schneller erreichen als die Aussparungen 13; 15 mit der größeren Ausformung. Verhältnismäßig schnell wird dadurch eine hohe Initialfestigkeit erreicht, wobei durch die Knochenpartikel, die beim Einsetzen abgeschabt werden und sich in den Aussparungen 13; 15 sammeln, die Knochenbildung und das Einheilen des Implantates gefördert wird. Die vorzugsweise schräg angeordnete, zur Unterseite des Implantates gerichtete Ausfräsung 17 erleichtert das Einsetzen des Implantates in den Osteotomieschlitz.

### BEZUGSZEICHENAUFSTELLUNG

- 1: Gewinde
- 2: Grundkörper
- 3: Gewindeträger
- 4: Steg
- 5: Ringabschnitt
- 6: Rillen
- 6a: wellenförmige oder spitz auslaufende Oberflächenstruktur
- 6b: Oberflächenstruktur der Innenwandflächen
- 6c: sägezahnförmige Oberflächenstruktur
- 7 7a: Bodengrund
- 8: Grundkörper
- 9: -
- 10: Flanke
- 11: Flanke
- 12: Aussparung
- 13: Aussparung
- 14: Aussparung
- 15: Aussparung
- 16: Einsenkung
- 17: Ausfräsung

- A A': Richtung entgegen der Einschubrichtung
- B: Abschnitt
- C: Abschnitt
- D: Durchmesser
- E: Wellen-/Spitzenabstand
- F: Strukturtiefe
- G: Ringbreite des Grundkörpers
- K: Richtung der Hauptkaukraft
- R1: Übergangsradius

- h2: Kernhöhe
- h3: zentrale Höhe des Grundkörpers

## Patentansprüche

1. Laterales Implantat mit einem Gewindeträger, einem oder mehreren kraftübertragenden, scheiben- und ringförmigen Grundkörpern (2) und einem oder mehreren Stegen (4), die den Grundkörper (2) und den Gewindeträger (3) miteinander verbinden, wobei der Grundkörper (2), der Gewindeträger (3) und der Steg (4) mindestens teilweise eine Oberflächenvergrößerung aufweisen, **dadurch gekennzeichnet, dass** in die Oberfläche ausgewählter Abschnitte des Grundkörpers (2) und der Stege (4) makromechanische Oberflächenstrukturen (6a; 6b; 6c; 11; 12; 13; 14; 15; 16) eingearbeitet sind.

2. Laterales Implantat nach Anspruch 1, **dadurch gekennzeichnet, dass** Oberflächenstrukturen (6a; 6b; 6c) spiralförmig angeordnet sind, wobei das Zentrum der Spirale vorzugsweise im Bereich des Gewindeträgers (3) liegt.

3. Laterales Implantat nach Anspruch 1 und 2, **dadurch gekennzeichnet, dass** die Oberflächenstrukturen (6a, 6b) durch wellenförmig oder spitz auslaufende Rillen (6) gebildet werden.

4. Laterales implanat nach Anspruch 1, **dadurch gekennzeichnet**, das die Oberflächenstrukturen unterschiedlich ausgeformule Aussparungen (12; 13; 14; 15) und Ausfräsungen (17) sind, die in den Rendzonen des Grundkörpers (2) eingearbeitet sind und in einer peripheren Kernhöhe h2 des Grundkörpers (2) auslaufen.

5. Laterales Implantat nach Anspruch 4, **dadurch gekennzeichnet, dass** sich die Konfigurationen der Aussparungen (12; 13; und 14; 15) in ihren Geometrien hinterschneiden.

6. Laterales Implantat nach Anspruch 1, **dadurch gekennzeichnet, dass** die Oberflächenstruktur (6c) ein sägezahnförmiges Profil mit einer annähernd senkrecht zur Einschubrichtung verlaufenden Flanke (10) und einer konkaven Rückenflanke (11) ist, wobei die konkave Flanke (11) direkt am Fuß der nächstfolgenden senkrechten Flanke (10) ausläuft.

7. Laterales Implantat nach Anspruch 1, **dadurch gekennzeichnet, dass** die Oberflächenstruktur (16) durch napfartige Einsenkungen gebildet wird.

8. Laterales Implantat nach einem der Ansprüche 1 bis 3, **dadurch gekennzeichnet, dass** bei einem Implantatdurchmesser D von 8 - 15 mm und einer Höhe h3 des Grundkörpers von 0,7 - 1,2 mm die Tiefe F der wellenförmigen oder spitz auslaufenden Oberflächenstrukturen (6a; 6b) 0,05 - 0,25 mm beträgt.

9. Laterales Implantat nach einem der Ansprüche 1 bis 3, **dadurch gekennzeichnet, dass** der Wellen- oder Spitzenabstand E der Oberflächenstrukturen (6a; 6b) 0,2 - 0,7 mm beträgt.

10. Laterales Implantat nach einem der Ansprüche 1 bis 3, **dadurch gekennzeichnet, dass** der Bodengrund (7a) der wellenförmigen oder spitz auslaufenden Oberflächenstrukturen (6a, 6b) eine runde, konkave Form aufweist.

11. Laterales Implantat nach Anspruch 1, **dadurch gekennzeichnet, dass** die Höhe des Steges (4), die im Anschlussbereich des Gewindeträgers (3) der Höhe h3 des Grundkörpers (2) entspricht, auf eine periphere Höhe (h2) abnimmt, wobei mit zunehmender Abnahme der Höhe (h3) die Tiefe (F) der Oberflächenstrukturen (6a; 6c) zunimmt.

12. Laterales Implantat nach einem der Ansprüche 1 und 11, **dadurch gekennzeichnet, dass** die Ausbildung der Oberflächenstrukturen (6a; 6b; 6c;) auf dem Steg (4) von der Peripherie des Grundkörpers (2) ausgehend zum Gewindeträger (3) hin allmählich abnimmt und in einem erweiterten Anschlussbereich des Gewindeträgers (3) am Steg (4) mit sich ständig verringernder Tiefe F auslaufen.

13. Laterales Implantat nach einem der Ansprüche 1, **dadurch gekennzeichnet, dass** die Oberflächenstrukturen (6a; 6c) konzentrisch zum Gewindeträger (3) verlaufen.

14. Laterales Implantat nach einem der Ansprüche 1, **dadurch gekennzeichnet, dass** die Oberflächenstrukturen (6a; 6c) parallel zueinander verlaufen.

15. Laterales Implantat nach Anspruch 1 bis 14, **dadurch gekennzeichnet, dass** die Oberflächenstrukturen (6a; 6c; 11; 12; 13; 14; 15; 16) auf der zum Gewindeträger (3) gerichteten Oberseite des Implantats angebracht ist.

16. Laterales Implantat nach Anspruche 1 bis 14, **dadurch gekennzeichnet, dass** die Oberflächenstrukturen (6a; 6c; 11; 12; 13; 14; 15; 16) auf der zum Gewindeträger (3) abgewandten Unterseite des Implantats angebracht ist.

17. Laterales Implantat nach einem der Ansprüche 1 bis 16, **dadurch gekennzeichnet, dass** in den Außenwandflächen des Grundkörpers (2) Oberflächenstrukturen (6b) eingearbeitet sind.

## Claims

1. Lateral implant with a thread carrier (3), one or a plurality of force transmitting, disc- or annular shaped main bodies (2) and one or a plurality of bars (4), which connect the main body (2) and the thread carrier (3), whereas the main body (2), the thread carrier (3) and the bar (4) comprise at least in part a surface enlargement,
**characterized in that**
macro mechanical surface structures (6a; 6b; 6c; 11; 12; 13; 14; 15; 16) are worked into the surface of selected parts of the main body (2) and the bars (4).

2. Lateral implant according to claim1,
**characterized in that**
surface structures (6a; 6b; 6c) are arranged in a spiral manner, whereas the center of the spiral preferably is located in the vicinity of the thread carrier (3).

3. Lateral implant according to claim 1 and 2,
**characterized in that** ,
the surface structures (6a; 6b; 6c) are composed of undulated or tapered grooves (6).

4. Lateral implant according to claim 1,
**characterized in that** ,
the surface structures (6a; 6b; 6c) are differently shaped cut-outs (12; 13; 14; 15) and notches (17), which are worked into the peripheral zone of the main body (2) and taper in a peripheral main height h2 of the main body (2).

5. Lateral implant according to claim 4 2,
**characterized in that** ,
the configurations of the cut-outs (12; 13; and 14; 15) undercut each other with respect to their geometries.

6. Lateral implant according to claim 1,
**characterized in that** ,
the surface structure (6c)is a sawtooth-shaped profile with an almost perpendicular to the direction of insertion tapered shoulder (10) and a concave back shoulder (11), whereas the concave shoulder (11) tapers directly at the base of the neighboring perpendicular shoulder (10).

7. Lateral implant according to claim 1,
**characterized in that** ,
the surface structure (16) is formed by bowl-shaped recesses.

8. Lateral implant according to one of claims 1 to 3,
**characterized in that**,
at a diameter D of the implant of 8 - 15 mm and a height h3 of the main body (2) of 0.7 - 1.2 mm the depth F of the undulated or tapered surface structures (6a; 6b) amounts to 0.05 - 0.25 mm.

9. Lateral implant according to one of claims 1 to 3,
**characterized in that** ,
the crest or tip interval E of the surface structures (6a; 6b) amounts to 0.2 - 0.7 mm.

10. Lateral implant according to one of claims 1 to 3,
**characterized in that** ,
the bottom ground (7a) of the undulated or tapered surface structures (6a, 6b) comprises a round, concave shape.

11. Lateral implant according to claim 1,
**characterized in that** ,
the height of the bar (4), which in the vicinity of the foot of the thread carrier (2) corresponds to the height h3 of the main body (2), decreases to a peripheral height (h2), whereas with increasing decrease of height (h3) the depth (F) of the surface structures (2) increases.

12. Lateral implant according to one of claims 1 and 11,
**characterized in that**,
that the formation of the surface structures (6a; 6b; 6c) on the bar (4) decreases gradually departing from the periphery of the main body (2) towards the thread carrier (3)and tapers in an expanded vicinity of the foot of the thread carrier (3) on the bar (4) with incessant diminishing depth (F).

13. Lateral implant according to claim 1,
**characterized in that** ,
the surface structures (6a; 6b) run concentrically with respect to the thread carrier (3).

14. Lateral implant according to claim 1,
**characterized in that** ,
the surface structures (6a; 6c) run in parallel to each other.

15. Lateral implant according to claim 1 to 14,
**characterized in that** ,
the surface structures (6a; 6c; 11; 12; 13; 14; 15; 16) are arranged on the top face faced towards the thread carrier (3)

16. Lateral implant according to claim 1 to 14,
**characterized in that** ,
the surface structures (6a; 6c; 11; 12; 13; 14; 15; 16) are arranged on the reverse side faced away from the thread carrier (3).

17. Lateral implant according to one of claims 1 to 15,
**characterized in that** ,
in the outside walls of the main body (2) surface structures are worked in.

## Revendications

1. Implant latéral muni d'un support fileté, d'un ou de plusieurs corps de base (2) en forme de disque et d'anneau, à transmission de forces, et d'une ou de plusieurs ailes verticales (4) reliant le corps de base (2) au support fileté (3), le corps de base (2), le support fileté (3) et l'aile verticale (4) présentant au moins partiellement une surface agrandie, **caractérisé en ce que** des structures de surface (6a ; 6b ; 6c ; 11 ; 12 ; 13 ; 14 ; 15 ; 16) macromécaniques sont incrustées dans la surface de certaines sections du corps de base (2) et des ailes verticales (4).

2. Implant latéral selon la revendication 1, **caractérisé en ce que** des structures de surface (6a ; 6b; 6c) sont disposées en forme de spirale, le centre de la spirale se trouvant de préférence dans la zone du support fileté (3).

3. Implant latéral selon la revendication 1 et 2, **caractérisé en ce que** les structures de surface (64, 6b) sont formées par des rainures (6) en forme de vague ou se terminant en pointe.

4. Implant latéral selon la revendication 1, **caractérisé en ce que** les structures de surface présentent des évidements (12 ; 13 ; 14 ; 15) de forme différente et des fraisures (17) incrustés dans les bordures du corps de base (2) et se terminant à une hauteur de coeur périphérique h2 du corps de base (2).

5. Implant latéral selon la revendication 4, **caractérisé en ce que** les configurations des évidements (12 ; 13 ; et 14 ; 15) se superposent dans leur géométrie.

6. Implant latéral selon la revendication 1, **caractérisé en ce que** la structure de surface (6c) présente un profil en forme de dents de scie muni d'un flanc (10) à peu près perpendiculaire au sens d'insertion et d'un flanc arrière (11) concave, le flanc concave (11) se terminant directement au pied du flanc perpendiculaire suivant (10).

7. Implant latéral selon la revendication 1, **caractérisé en ce que** la structure de surface (16) est formée d'enfoncements en forme de godet.

8. Implant latéral selon l'une des revendications 1 à 3, **caractérisé en ce que**, pour un diamètre d'implant D de 8 - 15 mm et une hauteur h3 du corps de base de 0,7 - 1,2 mm, la profondeur F des structures de surface (6a ; 6b) en forme de vague ou se terminant en pointe est comprise entre 0,05 - 0,25 mm.

9. Implant latéral selon l'une des revendications 1 à 3, **caractérisé en ce que** l'écart des vagues ou des pointes E des structures de surface (6a ; 6b) est compris entre 0,2 - 0,7 mm.

10. Implant latéral selon l'une des revendications 1 à 3, **caractérisé en ce que** le fond (7a) des structures de surface (6a, 6b) en forme de vague ou se terminant en pointe présente une forme ronde concave.

11. Implant latéral selon la revendication 1, **caractérisé en ce que** la hauteur de l'aile verticale (4) correspondant à la hauteur h3 du corps de base (2) dans la zone de raccordement au support fileté (3) décroît pour arriver à une hauteur périphérique (h2), la profondeur (F) des structures de surface (6a ; 6c) augmentant en fonction de la diminution de la hauteur (h3).

12. Implant latéral selon l'une des revendications 1 et 11, **caractérisé en ce que** la formation des structures de surface (6a; 6b ; 6c) décroît progressivement sur l'aile verticale (4) en partant de la périphérie du corps de base (2) et en allant vers le support fileté (3) et se termine sur l'aile verticale (4), dans la zone de raccordement au support fileté (3), à une profondeur F diminuant de manière continue.

13. Implant latéral selon l'une des revendications 1, **caractérisé en ce que** les structures de surface (6a ; 6c) s'étendent de manière concentrique par rapport au support fileté (3).

14. Implant latéral selon l'une des revendications 1, **caractérisé en ce que** les structures de surface (6a ; 6b) sont parallèles les unes aux autres.

15. Implant latéral selon l'une des revendications 1 à 14, **caractérisé en ce que** les structures de surface (6a ; 6c ; 11; 12 ; 13; 14 ; 15 ; 16) sont placées sur la face de l'implant située en haut et orientée vers le support fileté (3).

16. Implant latéral selon les revendications 1 à 14, **caractérisé en ce que** les structures de surface (6a; 6c ; 11 ; 12; 13; 14 ; 15 ; 16) sont placées sur la face de l'implant située en dessous et se détournant du support fileté (3).

17. Implant latéral selon l'une des revendications 1 à 16, **caractérisé en ce que** des structures de surface (6b) sont incrustées dans les faces des parois latérales du corps de base (2).
